# DEMANDE DE BREVET EUROPEEN

(11) **EP 1 568 872 A1**
(43) Date de publication de la demande: **31.08.2005**
(21) Numéro de dépôt: 05290010.7
(22) Date de dépôt: 04.01.2005
(51) Int. Cl.: F02D 41/02, F01N 3/025, F01M 11/10

(54) **Système d'aide à la régénération de moyens de dépollution**

(30) Priorité: 27.02.2004 FR 0402058
(71) Demandeur: Peugeot Citroen Automobiles S.A., 78140 Vélizy Villacoublay (FR)
(72) Inventeur: Folliot, Pascal, 78280 Guyancourt (FR); Ameloot, Piet, 92200 Neuilly Sur Seine (FR)
(74) Mandataire: Habasque, Etienne J. Jean-François

(57) **Abrégé**

Ce système d'aide à la régénération de moyens de dépollution (1) intégrés dans une ligne d'échappement (2) d'un moteur (3) de véhicule, comportant des moyens de contrôle du fonctionnement de celui-ci (6,7,8), pour le basculer entre des fonctionnements en mode pauvre (7) et en mode riche nominal de régénération (9) par utilisation de post-injections de carburant dans les cylindres du moteur, et par modification d'un paramètre de contrôle du fonctionnement du moteur, est caractérisé en ce qu'il comporte des moyens (11) de détermination du niveau de dilution de l'huile de lubrification du moteur par le carburant d'alimentation de celui-ci, des moyens (12) de surveillance de l'accroissement de celui-ci lors d'un fonctionnement du moteur en mode riche nominal, pour, lorsque ce niveau atteint un seuil haut (Sh), basculer le fonctionnement du moteur en mode riche dégradé (10), de réduction ou de ralentissement de l'augmentation de la dilution de l'huile, par modification d'un paramètre de contrôle de fonctionnement du moteur et des moyens de surveillance (12) de cette réduction, pour, lorsque ce niveau de dilution atteint un seuil bas (Sb), rebasculer le fonctionnement du moteur en mode riche nominal (9).

## Description

La présente invention concerne un système d'aide à la régénération de moyens de dépollution intégrés dans une ligne d'échappement d'un moteur thermique d'un véhicule automobile.

On sait que de tels moyens de dépollution peuvent par exemple comporter un piège à NOx qui est un système de réduction des émissions polluantes des moteurs thermiques de véhicules automobiles.

Le moteur est alors associé à des moyens de contrôle de son fonctionnement pour basculer celui-ci entre un fonctionnement en mode pauvre standard et un fonctionnement de régénération en mode riche nominal, selon des paramètres différents de contrôle du fonctionnement de ce moteur.

Dans le mode de fonctionnement en mode pauvre standard, le piège à NOx stocke ceux-ci et lorsque ce piège est saturé, on déclenche sa régénération en basculant le moteur en mode de fonctionnement riche de déstockage des NOx dans lequel le moteur produit des réducteurs tels que par exemple CO et HC.

Ceci est assuré de façon classique en modifiant au moins un paramètre de contrôle du fonctionnement du moteur, c'est-à-dire au moins un paramètre relatif à l'injection de carburant dans le moteur (quantité, phasage, pression, etc..) et/ou au moins un paramètre de la boucle d'air d'alimentation du moteur (débit d'air, recyclage, pression du turbocompresseur, etc..).

En particulier, lors de ce fonctionnement en mode riche nominal de régénération du moteur, on utilise des post-injections de carburant dans les cylindres de celui-ci. De même, des calibrations moteur avec post-injection sont utilisées pour la régénération d'un filtre à particules intégré dans la ligne d'échappement.

Ces post-injections sont en fait des injections de carburant après le point mort haut (PMH).

Or, ces post-injections induisent de la dilution de l'huile de lubrification du moteur par le carburant post-injecté dans celui-ci.

En effet, la dilution d'huile est due au fait que la post-injection se fait tardivement au cours du cycle moteur et que le carburant est alors en grande partie injecté sur les parois de la chambre de combustion.

Une partie infime de carburant va alors passer dans le carter moteur via les segments du piston.

La conséquence en est une dilution de l'huile de lubrification par le carburant.

Or, une telle dilution d'huile peut engendrer une chute de la viscosité de celle-ci et donc de la pression d'huile, un vieillissement prématuré ou encore une dilution des additifs présents dans cette huile.

Le but de l'invention est donc de résoudre ces problèmes.

A cet effet, l'invention a pour objet un système d'aide à la régénération de moyens de dépollution intégrés dans une ligne d'échappement d'un moteur thermique de véhicule automobile, comportant des moyens de contrôle du fonctionnement de celui-ci, pour basculer celui-ci entre un fonctionnement en mode pauvre standard et un fonctionnement en mode riche nominal de régénération, par utilisation de post-injections de carburant dans les cylindres du moteur, et par modification d'au moins un paramètre de contrôle du fonctionnement du moteur, caractérisé en ce qu'il comporte des moyens de détermination du niveau de dilution de l'huile de lubrification du moteur par le carburant d'alimentation de celui-ci, des moyens de surveillance de l'accroissement de celui-ci lors d'un fonctionnement du moteur en mode riche nominal, pour, lorsque ce niveau atteint un premier seuil haut, basculer le fonctionnement du moteur en mode riche dégradé, de réduction ou de ralentissement de l'augmentation de la dilution de l'huile par le carburant, par modification d'au moins un paramètre de contrôle de fonctionnement du moteur et des moyens de surveillance de cette réduction, pour, lorsque ce niveau de dilution atteint un second seuil bas, rebasculer le fonctionnement du moteur en mode riche nominal, et les moyens de dépollution comportent en outre un filtre à particules dont la régénération nécessite un mode de fonctionnement du moteur avec post-injection.

Suivant d'autres caractéristiques :
- les moyens de détermination du niveau de dilution comprennent un capteur de dilution ;
- les moyens de détermination du niveau de dilution comprennent des moyens d'estimation de celui-ci à partir de cartographies de dilution d'huile par le carburant et d'évaporation de celui-ci au cours du fonctionnement du moteur dans ses différents modes et à partir de la durée de fonctionnement du moteur selon chaque mode ; et
- il comporte en outre des moyens d'évaporation du carburant dont le fonctionnement est déclenché par les moyens de surveillance lorsque le niveau de dilution d'huile atteint le premier seuil haut.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure et le fonctionnement d'un système d'aide selon l'invention ; et
- la Fig.2 représente une courbe illustrant une évolution d'un niveau de dilution d'huile.

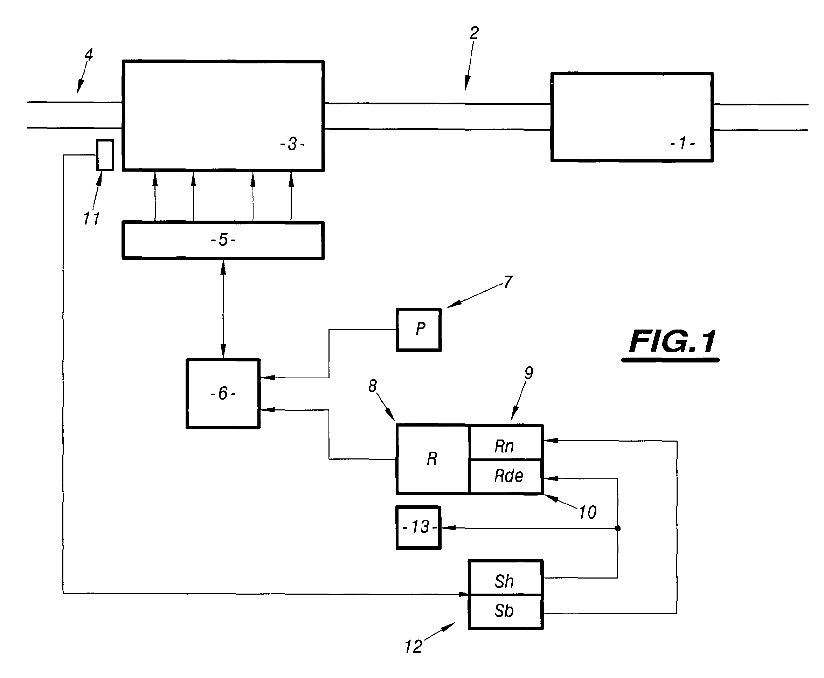

On a en effet illustré sur ces figures et en particulier sur la figure 1, un système d'aide à la régénération de moyens de dépollution désignés par la référence générale 1 sur cette figure, intégrés par exemple dans une ligne d'échappement 2 d'un moteur thermique 3 d'un véhicule automobile.

Ce moteur est également associé à des moyens d'alimentation en air désignés par la référence générale 4 et à des moyens de contrôle de son alimentation en carburant désignés par la référence générale 5, comprenant par exemple des moyens à rampe commune d'alimentation des injecteurs de carburant dans les cylindres de ce moteur.

Le fonctionnement de ces moyens est piloté par des moyens de contrôle désignés par la référence générale 6.

Les moyens de dépollution comprennent par exemple un piège à NOx et les moyens de contrôle 6 sont alors adaptés pour faire basculer le fonctionnement du moteur entre un fonctionnement en mode standard pauvre et un fonctionnement en mode de régénération riche selon des paramètres différents de contrôle de fonctionnement de celui-ci.

En particulier, des post-injections de carburant dans les cylindres du moteur sont alors utilisées de façon classique.

Ces paramètres sont par exemple illustrés par les références 7 et 8 respectivement sur ces figures.

Les paramètres 7 sont alors utilisés pour piloter le moteur en mode de fonctionnement standard pauvre tandis que les paramètres 8 sont utilisés pour faire fonctionner le moteur en mode de régénération riche.

En fait, les paramètres 8 sont formés de deux jeux de paramètres, à savoir les jeux 9 et 10, correspondant l'un à un jeu de paramètres de fonctionnement du moteur en mode riche nominal et l'autre à un jeu de paramètres de fonctionnement du moteur en mode riche dégradé, établi par cartographie pour réduire la dilution de l'huile de lubrification du moteur par le carburant d'alimentation de celui-ci.

On conçoit alors que dans ce cas, les paramètres 9 permettent d'obtenir un fonctionnement nominal du moteur en mode riche et donc une régénération optimale des moyens de dépollution.

Les paramètres 10 permettent quant à eux de réduire au maximum la dilution de l'huile par le carburant par exemple post-injecté tout en maintenant une activité de régénération.

Ces différents paramètres sont préétablis et se présentent par exemple sous la forme de cartographies de dilution.

En mode riche dégradé, il est ainsi par exemple possible de privilégier des points de fonctionnement entraînant le moins de dilution possible ou de réduire la fréquence d'utilisation du mode riche, tout en respectant une efficacité de régénération minimale des moyens de dépollution.

A cet effet, le système selon l'invention comporte également des moyens de détermination du niveau de dilution de l'huile de lubrification du moteur par le carburant d'alimentation de celui-ci.

Ces moyens peuvent présenter différentes formes.

Ainsi par exemple, sur la figure 1, ces moyens se présentent sous la forme d'un capteur désigné par la référence générale 11, qui mesure la qualité de l'huile et cette information relative à la qualité de l'huile est utilisée pour adapter les stratégies de contrôle du fonctionnement du moteur et donc de régénération des moyens de dépollution.

A cet effet, le système comporte en outre des moyens 12 de surveillance de l'évolution de ce niveau d'huile pour adapter ces stratégies.

Ainsi par exemple, ces moyens de surveillance sont adaptés pour surveiller l'accroissement de ce niveau de dilution lors du fonctionnement du moteur en mode riche nominal selon les paramètres 9, pour, lorsque celui-ci atteint un premier seuil haut de dilution désigné par Sh sur cette figure, basculer le fonctionnement du moteur en mode riche dégradé selon les paramètres 10, afin de réduire le ou de ralentir l'augmentation du niveau de dilution de l'huile par le carburant par modification d'au moins un paramètre de contrôle de fonctionnement de ce moteur, et de surveillance de la réduction de ce niveau de dilution lorsque le moteur fonctionne en mode riche dégradé, pour lorsque ce niveau atteint un second seuil bas, nommé Sb sur cette figure 1, rebasculer le fonctionnement du moteur en mode riche nominal selon les paramètres 9.

Par ailleurs, des moyens d'évaporation de carburant désignés par la référence générale 13 sur cette figure, peuvent également être envisagés et déclenchés lorsque le niveau de dilution atteint le premier seuil haut Sh pour accélérer encore la réduction du niveau de dilution.

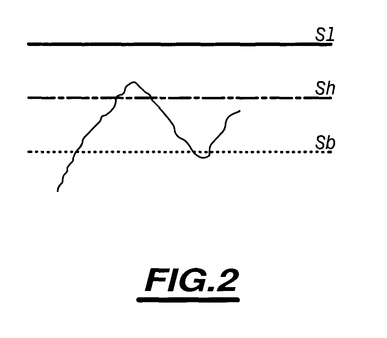

On conçoit alors que grâce à une telle structure et comme cela est illustré sur la figure 2, il est possible de maintenir le niveau de dilution d'huile au-dessous d'un seuil limite appelé SI sur cette figure 2, afin de conserver à l'huile ses qualités de lubrification.

Comme cela a été mentionné précédemment, les moyens de détermination peuvent comporter un capteur de dilution.

Selon un autre mode de réalisation, ces moyens de détermination peuvent comporter des moyens d'estimation de celui-ci à partir de cartographies de dilution d'huile par le carburant et d'évaporation de celui-ci au cours du fonctionnement du moteur en modes riche et pauvre.

Ces moyens d'estimation tiennent alors à jour la valeur du niveau de dilution d'huile en fonction de plusieurs paramètres de fonctionnement du moteur, tels que par exemple le régime, la charge, la température, etc..., de celui-ci. Cette valeur de dilution peut alors être utilisée pour adapter les stratégies de régénération des moyens de dépollution ou pour alerter un utilisateur du véhicule et lui conseiller de déclencher une vidange de l'huile.

Ces moyens d'estimation utilisent alors des cartographies de dilution d'huile et d'évaporation de carburant, par exemple horaires et calculent le niveau de dilution par cumul en fonction de la durée de fonctionnement du moteur dans tel ou tel mode de fonctionnement.

Bien entendu, d'autres modes de réalisation encore peuvent être envisagés.

Ainsi par exemple, un filtre à particules peut être intégré dans la ligne d'échappement. Ce filtre à particules nécessite également un mode de fonctionnement du moteur avec post-injections différent du mode riche et qui entraîne également une dilution de l'huile, et dont il faut tenir compte.

## Revendications

1. Système d'aide à la régénération de moyens de dépollution (1) intégrés dans une ligne d'échappement (2) d'un moteur thermique (3) de véhicule automobile, comportant des moyens de contrôle du fonctionnement de celui-ci (6,7,8), pour basculer celui-ci entre un fonctionnement en mode pauvre standard (7) et un fonctionnement en mode riche nominal de régénération (9), par utilisation de post-injections de carburant dans les cylindres du moteur, et par modification d'au moins un paramètre de contrôle du fonctionnement du moteur, **caractérisé en ce qu'**il comporte des moyens (11) de détermination du niveau de dilution de l'huile de lubrification du moteur par le carburant d'alimentation de celui-ci, des moyens (12) de surveillance de l'accroissement de celui-ci lors d'un fonctionnement du moteur en mode riche nominal, pour, lorsque ce niveau atteint un premier seuil haut (Sh), basculer le fonctionnement du moteur en mode riche dégradé (10), de réduction ou de ralentissement de l'augmentation de la dilution de l'huile par le carburant, par modification d'au moins un paramètre de contrôle de fonctionnement du moteur et des moyens de surveillance (12) de cette réduction, pour, lorsque ce niveau de dilution atteint un second seuil bas (Sb), rebasculer le fonctionnement du moteur en mode riche nominal (9), et **en ce que** les moyens de dépollution comportent en outre un filtre à particules dont la régénération nécessite un mode de fonctionnement du moteur avec post-injection.

2. Système selon la revendication 1, **caractérisé en ce que** les moyens de détermination du niveau de dilution comprennent un capteur de dilution (11).

3. Système selon la revendication 1, **caractérisé en ce que** les moyens de détermination du niveau de dilution comprennent des moyens d'estimation de celui-ci à partir de cartographies de dilution d'huile par le carburant et d'évaporation de celui-ci au cours du fonctionnement du moteur dans ses différents modes et à partir de la durée de fonctionnement du moteur selon chaque mode.

4. Système selon l'une quelconque des revendications précédentes, **caractérisé en ce qu'**il comporte en outre des moyens (13) d'évaporation du carburant dont le fonctionnement est déclenché par les moyens de surveillance (12) lorsque le niveau de dilution d'huile atteint le premier seuil haut (Sh).
